# EUROPEAN PATENT APPLICATION

(11) **EP 1 973 314 A1**
(43) Date of publication of application: **24.09.2008**
(21) Application number: 08004911.7
(22) Date of filing: 17.03.2008
(51) Int. Cl.: H04M 1/247, H04M 1/725, G06F 3/033

(54) **Method and apparatus for motion-based communication**

(30) Priority: 19.03.2007 US 725914
(71) Applicant: Gemini Mobile Technologies, Inc., San Mateo CA 94403 (US)
(72) Inventor: Ogasawara, Gary, Hayato, Foster City, CA 94404 (US); Norton, Joseph, Wayne, 112-0022 Bunkyo Tokyo (JP)
(74) Representative: Wilhelm, Martin

(57) **Abstract**

A handheld device user may engage in motion-based communication with a target user over a wireless network. In one embodiment, a plurality of movements are associated with a plurality of corresponding communications. Upon detection of a handheld device motion, a determination may be made as to whether the handheld device motion corresponds to one of the known movements. If so, one of the plurality of corresponding communications may be sent to the target user over the wireless network.

## Description

### FIELD OF THE INVENTION

The present invention relates generally to motion-based communication, and more particularly to enabling motion-based communications for handheld devices.

### BACKGROUND OF THE INVENTION

Mobile handheld devices, such as personal digital assistants (PDAs), cellular telephones, smartphones, etc., are continually evolving and being used to access an ever-increasing array of online services and content, such as online gaming, Internet browsing, online shopping, social networking and even navigation of online three dimensional (3D) environments. However, despite the emergence of these new applications, user communication has been limited essentially to two forms - verbal and key-based input. That is, mobile device users have been limited to spoken forms of communication, or the cumbersome task of entering a series of individual key strokes representative of the desired communication.

By way of example, in an online chat environment a user desiring to send a particular communication to another user currently has to engage in a series of keypad entries corresponding to the communication to be sent. Even the use of a so-called "shortcut," which is a way of substituting a fewer number of key strokes for a pre-defined communication, requires some form of key-based entry. Not only does this form of input require the user to interact with a small keypad, but it also prevents the user from conveying a full range of communications in a prompt manner. For example, two common forms of communicating using handheld devices include sending short message service (SMS) messages and so-called "emoticons," which is a term referring to a sequence of ordinary printable characters (e.g., ":-)", "^_^", "-_-", ":)", "o_o", etc.), or a small image, intended to represent a human facial expression and/or convey a particular emotion. Emoticons are helpful in avoiding misunderstandings when engaging in simple online messaging (e.g., e-mail, instant messaging, online chat, etc.), which inherently lacks any accompanying facial expressions, body language, or vocal intonation.

Moreover, in the context of online 3D environments there is an even more pronounced disparity between the range of possible expressions and the capability of mobile device's to communicate such expressions. Accordingly, there is a need for an improved form of communication for handheld device users.

### SUMMARY OF THE INVENTION

Disclosed and claimed herein is a method and handheld device for motion-based communication. In one embodiment, a method for motion-based communication using a handheld device includes associating a plurality of movements with a plurality of corresponding communications, and detecting a handheld device motion. The method further includes determining if the detected handheld device motion corresponds to one of the plurality of movements, and if so, sending, from the handheld device, the corresponding communication over a wireless network.

In another embodiment, a handheld device is configured to communicate with a target user device over a wireless network, where the handheld device includes a wireless network interface configured to connect the handheld device to the wireless network, and a memory containing processor-executable instructions for implementing motion-based communication. The handheld device further includes a processor configured to execute the processor-executable instructions to associate a plurality of movements with a plurality of corresponding communications, to detect a motion of the handheld device, to determine if the motion corresponds to one of the plurality of movements, and if so, to send one of the plurality of corresponding communications over the wireless network to the target user device.

Other aspects, features, and techniques of the invention will be apparent to one skilled in the relevant art in view of the following description of the exemplary embodiments of the invention.

### BRIEF DESCRIPTION OF THE DRAWINGS

FIG. 1 illustrates a communication system in accordance with an embodiment of the invention;

FIG. 2 illustrates a simplified schematic of a handheld device in accordance with an embodiment of the invention;

FIGs. 3A - 3B illustrate perspective views of the handheld device of FIG. 2 implementing motion-based communication in accordance with one embodiment;

FIG. 4 illustrates another embodiment of a communication system consistent with the principles of the invention; and

FIG. 5 is a process for providing motion-based communication according to one embodiment of the invention.

### DETAILED DESCRIPTION OF THE EXEMPLARY EMBODIMENTS

The present disclosure relates generally to motion-based communication using a handheld device. In one embodiment, a plurality of movements may be associated with a plurality of corresponding communications. This association may include a database of handheld motions and corresponding communications stored either locally on a handheld device, or remotely. Different databases may be used where each corresponds to a specific communication context (e.g., chat database, avatar interaction database, SMS database, etc.). In another embodiment, a handheld device may be "trained" with particular handheld motions and corresponding communications.

In certain embodiments, a handheld device may be able to detect a handheld device motion using, for example, a motion sensor circuit. Thereafter, a determination may be made as to whether the detected handheld device motion corresponds to one of the aforementioned plurality of movements. In one embodiment, this determination may be based on a lookup operation performed by the handheld device, or an application executing thereon. In certain embodiments, the motion sensor may provide a motion signal representative of the detected handheld device motion. This motion signal may then be compared to the known movements stored in a database, for example, and/or to a list of user-defined movements.

If there is no match, the detected motion may be ignored. If, on the other hand, there is a match then the communication which corresponds to the detected motion may be sent by the handheld device to a target user device in accordance with one embodiment of the invention.

One aspect of the invention has particular applicability to online 3D environments, such as the 3D environment embodiment detailed in U.S. Publication No. 2007/001161, which is hereby fully incorporated by reference. Given the wide range of possible expression and general communication in the 3D environment context, the use of motion-based communication, in accordance with one embodiment of the invention, may have a particular benefit since such expression and communication would be significantly simplified.

The term "user" as used herein may refer to a particular individual or may refer to one or more "personalities" or "players" created by (or otherwise associated with) that individual. Each such online persona may be visually represented by a so-called "avatar," which refers to the user's visual representation of himself or herself, typically in the form of a two-dimensional icon. In addition, personalities (aka players) may be unique to a given "instance" of an online environment, or may alternatively move between different instances. As such, it should be understood that references to users shall include, when appropriate, such users' online personas.

As used herein, the terms "a" or "an" shall mean one or more than one. The term "plurality" shall mean two or more than two. The term "another" is defined as a second or more. The terms "including" and/or "having" are open ended (e.g., comprising). Reference throughout this document to "one embodiment", "certain embodiments", "an embodiment" or similar term means that a particular feature, structure, or characteristic described in connection with the embodiment is included in at least one embodiment of the present invention. Thus, the appearances of such phrases in various places throughout this specification are not necessarily all referring to the same embodiment. Furthermore, the particular features, structures, or characteristics may be combined in any suitable manner on one or more embodiments without limitation. The term "or" as used herein is to be interpreted as inclusive or meaning any one or any combination. Therefore, "A, B or C" means "any of the following: A; B; C; A and B; A and C; B and C; A, B and C". An exception to this definition will occur only when a combination of elements, functions, steps or acts are in some way inherently mutually exclusive.

In accordance with the practices of persons skilled in the art of computer programming, the invention is described below with reference to operations that are performed by a computer system or a like electronic system. Such operations are sometimes referred to as being computer-executed. It will be appreciated that operations that are symbolically represented include the manipulation by a processor, such as a central processing unit, of electrical signals representing data bits and the maintenance of data bits at memory locations, such as in system memory, as well as other processing of signals. The memory locations where data bits are maintained are physical locations that have particular electrical, magnetic, optical, or organic properties corresponding to the data bits.

When implemented in software, the elements of the invention are essentially the code segments to perform the necessary tasks. The code segments can be stored in a processor readable medium, which may include any medium that can store or transfer information. Examples of the processor readable mediums include an electronic circuit, a semiconductor memory device, a read-only memory (ROM), a flash memory or other non-volatile memory, a floppy diskette, a CD-ROM, an optical disk, a hard disk, a fiber optic medium, a radio frequency (RF) link, etc.

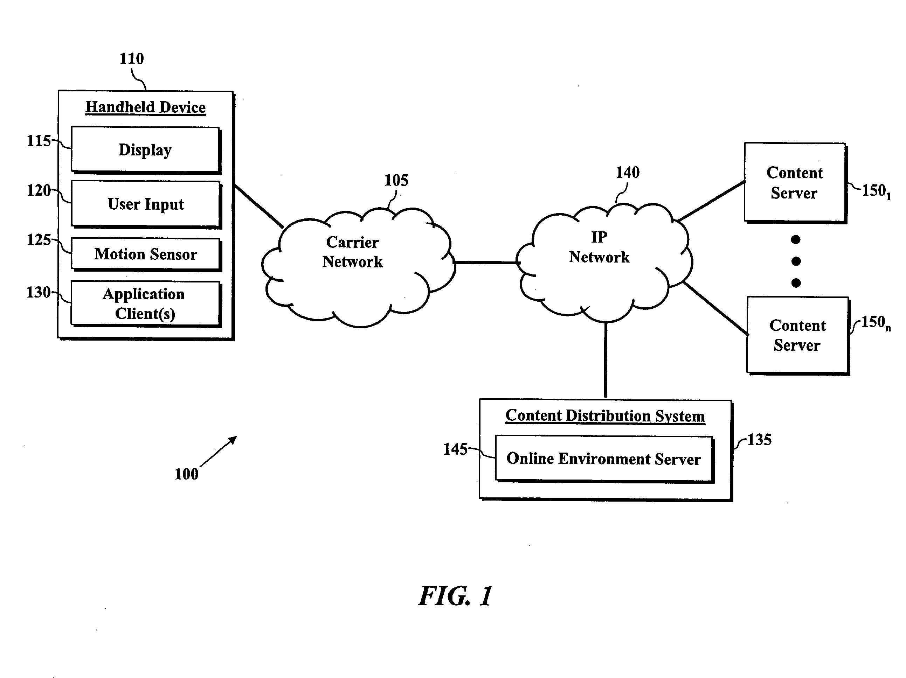

FIG. 1 depicts a communication system **100** in which one or more aspects of the invention may be implemented. In particular, communication system **100** is depicted as including a carrier network **105** which provides wireless communications services to at least one handheld device **110.** The carrier network **105** supports at least one wireless communications protocol such as Global System for Mobile (GSM) communications, General Packet Radio Service (GPRS), Code Division Multiple Access (CDMA) or Wideband CDMA (WCDMA). The handheld device **110** may be any electronic device adapted to communicate with the carrier network **105,** such as a cellular telephone, smartphone, PDA, handheld computer, etc.

The handheld device **110** includes a display **115,** a user input **120,** and a motion sensor **125** and may include one or more application clients **130,** which in one embodiment comprises one or more software modules executable by a processor (not shown) of the handheld device **110.** As will be described in more detail below, the motion sensor **125** may be comprised of any known motion sensing technology, such as a three-dimensional acceleration and/or velocity sensor technology, two-dimensional acceleration and/or velocity sensor technology, a strain or tilt detector, or any other sensor capable of detecting movement of the handheld device **110** by its user.

While in one embodiment, the display **115** may be a liquid crystal display (LCD), it should equally be appreciated that any other type of display consistent with the principles of the invention may be used. The user input **120** may include one or more buttons or keys in the form of a keypad, number pad, keyboard or any other collection of individual keys, buttons or the like. In another embodiment, the user input **120** may be integrated with the display **115** in the form of a touch screen.

In operation, the application client(s) **130** may facilitate the display of a graphical user interface (GUI) on the display **115** via which a user may experience online content, environments and/or services. In one embodiment, the application client(s) **130** may be a 3DGUI client as detailed in previously-incorporated U.S. Publication No. 2007/001161. It should further be appreciated that the application client(s) **130** may be used as or otherwise incorporated with an operating system interface, an application interface, a web browser interface or an interface to other environments in which there is user interaction.

Continuing to refer to FIG. 1, the application client **130** may be adapted to enable a user to request content from a content distribution system **135,** which is connected to the carrier network **105** through an Internet Protocol (IP) network **140** (e.g., the Internet). In certain embodiments, the content may be multimedia content (e.g., music, video, images, etc.), while in other embodiments the requested content may relate to an online environment (virtual or real) through which a user may navigate. To that end, in one embodiment the content distribution system **135** may include an online environment server **145** that provides the content for generation of the graphical representation of the online environment on the display **115** of the handheld device **110.** In certain embodiments, the online environment server **145** may access one or more content servers 150₁ - 150ₙ connected to the IP network **140** in connection with providing content (environment related or otherwise) and/or services to the handheld device **110.**

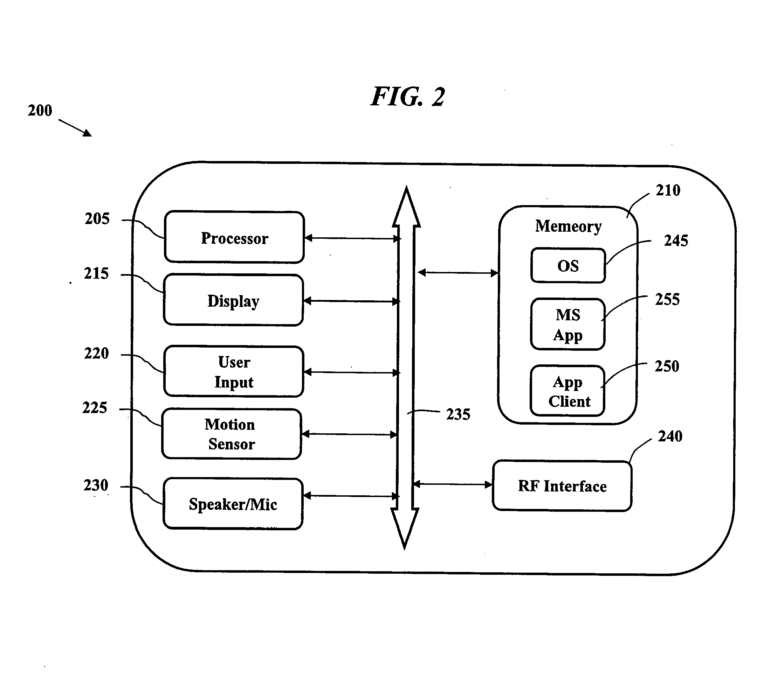

Referring now to FIG. 2, depicted is a simplified schematic of a handheld device capable of implementing one or more embodiments of the invention. In the embodiment of FIG. 2, handheld device **200** has a processor **205,** a memory **210,** a display **215,** a user input device **220,** a motion sensor **225** and a speaker/microphone **230** interconnected by bus **235.** The processor **205** may be a general processor, a digital signal processor, an application specific integrated circuit, digital logic device, an analog processor or other now known processing circuit.

With respect to the user input device **220** it may be implemented using a keypad, such as a push-button dialing pad, a keyboard or the like. The display **215** may be an LCD or any other type of display commonly used in consumer electronic devices. It should further be appreciated that the display **215** may be touchsensitive, such that it would also serve the function of user input device **220.** The speaker/microphone **230** may be used to provide and receive verbal communications and/or tones to facilitate cellular telephone conversation. In another embodiment, the speaker/microphone **230** may comprise integrated speaker and microphone circuitry.

The handheld device **200** also includes a radio frequency (RF) interface **240** that performs the function of transmitting and receiving RF communications from a wireless network (e.g., network **105** of FIG. 1). Transmissions to and from the RF interface **240** may be conducted under control of the operating system (OS) **245** and/or other application programs running on the handheld device **200,** such as application client (App client) **250.** In one embodiment, the App client **250** may comprise a web browser, chat interface application or an online environment client usable to interact with a plurality of other users. Although not necessarily pertinent to the scope of the disclosure, it should be appreciated that other application programs may also be stored in memory **210,** such as phone dialer programs, email programs, scheduling programs, Internet browser programs, word processing programs and spreadsheet programs, instant messaging programs, etc.

Continuing to refer to FIG. 2, it should be appreciated that motion sensor **225** may be an accelerometer, such as piezoresistive devices or prepackaged accelerometers in a single-, dual-, or tri-axial detecting device. In one embodiment, the motion sensor **225** may be a micro electro-mechanical system (MEMS) device, which can be comprised of one or more suspended cantilever beams or proof masses coupled with a deflection sensor and related circuitry. Such accelerometers may include a three-dimensional or two-dimensional accelerometer. In one embodiment, the motion sensor **225** may comprise one of the accelerometers manufactured and marketed by Analog Devices, Inc. of Norwood, Massachusetts under the trade name iMEMS®. Alternatively, a three-dimensional or two-dimensional velocity sensor may similarly be used alone or in conjunction with one or more accelerometers to detect movement of the handheld device **200** by its user. In other embodiments, the motion sensor **225** may be comprised of multiple such accelerometers.

Regardless of the configuration of the motion sensor **225,** the motion sensor **225,** in conjunction with the processor **205** and an associated motion sensing application (MS App) **255,** may be operable to enable a user of the handheld device **200** to send a target user motion-based communication over a network (e.g., carrier network **105** and/or IP network **140** of FIG. 1). By way of non-limiting examples, such communications may include sending text-based messages, such as SMS messages, or icon-based communications, such as sending emoticons and engaging in avatar interaction. The term "avatar interaction" involves controlling the movements of a particular user's avatar (or online persona) in an online environment in relation to other online users. Such avatar movements in an online environment can serve as a form of communication to other users. In addition, it should be appreciated that the aforementioned forms of communication need not be mutually exclusive. In other words, avatar interaction, for example, may itself include the sending of emoticons from one avatar to another. Engaging in avatar interaction may also include the sending of user commands to affect the avatar's actions, such as a command to initiate and terminate an active chat session.

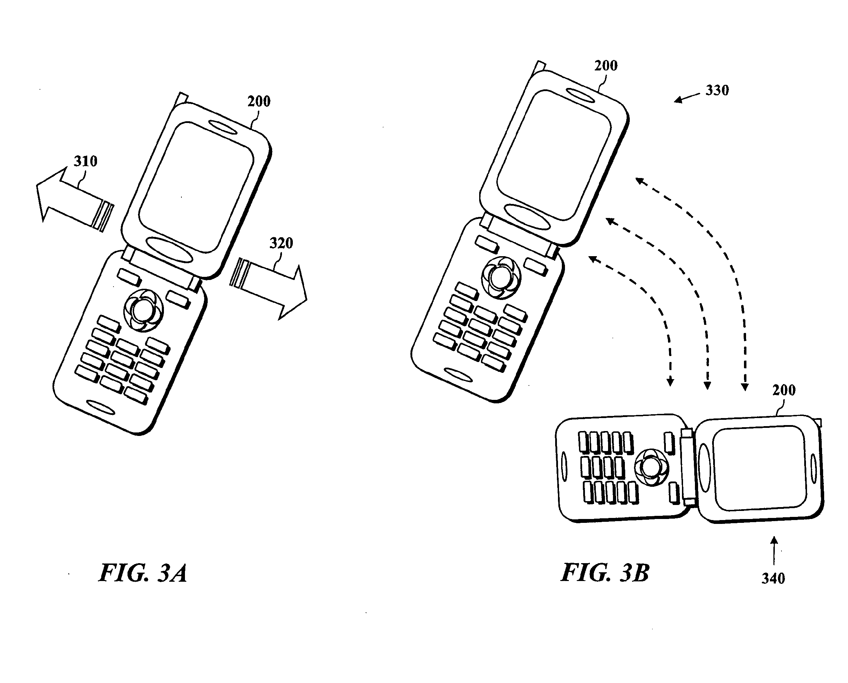

Referring now FIGs. 3A - 3B, depicted are additional views of the handheld device **200** of FIG. 2 while it is being subjected to certain motions by a user. In the embodiment of FIG. 3A, the handheld device **200** is being subjected to a back-and-forth motion by its user - first in direction **310** followed by motion in direction **320.** According to one aspect of the invention, this back-and-forth motion is associated with a predefined communication, such as a particular SMS message, emoticon, avatar action or command. Similarly, FIG, 3B depicts the handheld **200** of FIG. 2 while undergoing a downward-sloping motion where the handset **200** begins in position **330** and moves to position **340.** Again, this downward-sloping motion may be associated with a predefined communication (e.g., SMS message, emoticon, avatar action, command, etc.). It should be appreciated that the range of position handheld motions is virtually limitless and that FIGs. 3A - 3B merely depict two such possibilities.

With reference back to FIG. 2, the handheld **200** device includes a motion sensor **225** that is operable to detect handheld motions, such as the back-and-forth motion depicted in FIG. 3A and the downward-sloping motion of FIG. 3B, and provide a motion signal to the processor **205** in response thereto. The MS App 255 executing on the processor **205** may in turn be configured to perform a lookup operation based on the received motion signal to determine the desired corresponding communication. To that end, a database of handheld motions and corresponding communications may be stored either locally or remotely. Alternatively, multiple motion databases may be used where each corresponds to a specific communication context (e.g., chat database, avatar interaction database, SMS database, etc.). In this fashion, a particular movement, such as those depicted in FIGs. 3A - 3B, may have different meanings when used in different contexts.

In another embodiment, rather than relying on a database of handheld motions and corresponding communications, a user may be able to train the handheld device **200** by mapping particular movements with particular communications. In one embodiment, this functionality may be provided using a training mode of the MS App 255. It should further be appreciated that motion-based communications may be based in part on corresponding pre-stored handheld motions, as well as user-defined motions.

Continuing to refer to FIG. 2, once the desired communication has been identified, the MS App **255** may provide this information to the App client **250,** where the App client **250** is an application being used to communicate with a target user (e.g., online environment application client, SMS client, chat client, etc.). In another embodiment, the MS App **255** may be configured to send the motion-based communication directly to the target user. In either case, the user's motion is effectively converted into a desired communication and, as such, the resulting communication may be sent using any known communication protocol.

In order to prevent inadvertent messages from being sent, in one embodiment, the handheld device **200** may be operable in a motion sensing mode. By way of example, when the handheld device **200** is not in the motion sensing mode, movement of the handheld device **200** may be ignored. In contrast, when the handheld device **200** is operating in the motion sensing mode, movements may be detected and correspondingly processed by the MS App **255** in accordance with the description above. In certain embodiments, the handheld device **200** may enter the motion sensing mode in response to a user voice command or a particular key press. In other embodiments, the motion sensing mode may be automatically entered upon execution of the App client **250.** In still another embodiment handheld device movements may be processed based on context. For example, if a user is actively engaged in an online conversation then each handheld motion may be detected by the motion sensor **225,** causing corresponding motion signals to be sent to the MS App **255,** where it may then be determined if the given movements correspond to predefined communications.

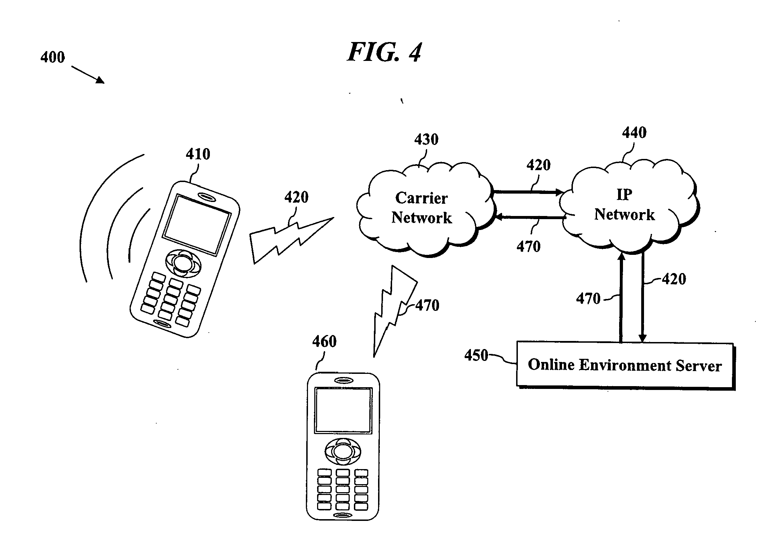

Referring now to FIG. 4, depicted is another embodiment of the communication system **100** of FIG. 1. In this embodiment, communication system **400** involves an initiating handheld device **410** communicating with a target handheld device **460** in an online environment that is generated by online environment server **450,** which in one embodiment may be a 3D environment server. Communication system **400** involves the initiating handheld device **410** being subjected to a movement that may correspond to a particular communication. Once the communication corresponding to the particular movement has been determined, the communication is sent as a motion-based communication **420** to the carrier network **430,** which in turn sends the communication **420** to IP network **440.** Online environment server **450,** which is connected to the IP network **440,** may then receive and process the motion-based communication **420** in accordance with the applicable online environment parameters. A corresponding communication signal **470** may then be sent to the target user device **460** by the online environment server **450,** as depicted in FIG. 4. In this fashion, one embodiment of motion-based communications is provided.

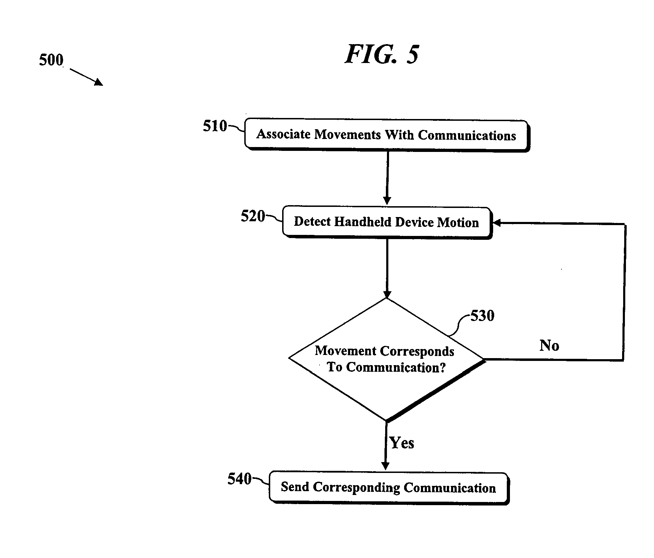

Referring now to FIG. 5, depicted is one embodiment of a process **500** for providing a motion-based communication using a communication system consistent with the principles of the invention (e.g., communication system **400** of FIG. 4). Process **500** begins at block **510** with a plurality of movements being associated with a plurality of corresponding communications. In one embodiment, this may comprise a database of handheld motions and corresponding communications stored either locally on the handheld device (e.g., initiating handheld device **410** of FIG. 4) or remotely. As previously mentioned, different databases may be used where each corresponds to a specific context (e.g., chat database, avatar interaction database, SMS database, etc.). In another embodiment, a handheld device may be "trained" with particular handheld motions and corresponding communications. In one embodiment, a training mode of the handheld device, or an application executing thereon, may be used to map particular movements with particular communications. The results of the user training may similarly be stored locally or remotely.

Process **500** may then continue to block **520** where a handheld device motion is detected. As discussed above, a motion sensor (e.g., motion sensor **225** of FIG. 2) may be used to detect the movements a handheld device is subjected to by its user. Such motion sensor may be any type of known motion sensor device or circuit, including an accelerometer, a MEMs device, a piezoresistive device or a prepackaged accelerometer in a single-, dual-, or tri-axial detecting device.

Process **500** is then depicted as continuing to decision block **530,** where a determination may be made as to whether the detected handheld device motion corresponds to one of the associated plurality of movements from block **510.** In one embodiment, this determination may be based on a lookup operation performed by the handheld device, or an application executing thereon (e.g., MS App **255** of FIG. 2). In one embodiment, the motion sensor may provide a motion signal representative of the detected handheld device motion. This motion signal may then be compared to the plurality of movements stored in a database and/or a list of user-defined movements. If there is no match, process **500** may simply ignore the detected motion and return to block **520** where subsequent handheld device motions may be monitored. If, on the other hand, there is a match then process **500** may continue to block **540** where the communication which corresponds to the detected motion may sent by the handheld device to a target user device (e.g., target user device **460** of FIG. 4) over a connected wireless network (e.g., carrier network **430** and IP network **440** of FIG. 4).

While the invention has been described in connection with various embodiments, it should be understood that the invention is capable of further modifications. This application is intended to cover any variations, uses or adaptation of the invention following, in general, the principles of the invention, and including such departures from the present disclosure as come within the known and customary practice within the art to which the invention pertains.

## Claims

1. A method for motion-based communication using a handheld device comprising the acts of:
associating a plurality of movements with a plurality of corresponding communications;
detecting a handheld device motion;
determining if the handheld device motion corresponds to one of the plurality of movements; and
sending, from the handheld device, one of the plurality of corresponding communications over a wireless network when said handheld device motion corresponds to one of the plurality of movements.

2. The method of claim 1, wherein associating the plurality of movements comprises storing, in a database, the plurality of movements and the plurality of corresponding communications.

3. The method of claim 2, wherein the method further comprises the acts of:
storing a user-defined movement in the database; and
storing a user-defined communication corresponding to the user-defined movement in the database.

4. The method of claim 2, wherein determining if the handheld device motion corresponds to one of the plurality of movements comprises performing a lookup of the database for the detected handheld device motion.

5. The method of any of the preceding claims, wherein determining if the handheld device motion corresponds to one of the plurality of movements comprises comparing the detected handheld device motion to the plurality of movements in order to identify a match.

6. The method of any of the preceding claims, wherein the handheld device motion is a result of user movement of the handheld device.

7. The method of any of the preceding claims, wherein the one of the plurality of corresponding communications is one of a text-based communication, an icon-based communication and an avatar interaction.

8. The method of any of the preceding claims, wherein determining if the handheld device motion corresponds to one of the plurality of movements comprises executing a motion sensing application program on the handheld device configured to match the handheld device motion to one of the plurality of movements.

9. The method of any of the preceding claims, further comprising the act of entering a motion sensing mode prior to said detecting.

10. The method of any of the preceding claims, further comprising the act of determining a communication context, and wherein the plurality of movements is based at least in part on the communication context.

11. A handheld device configured to communicate with a target user device over a wireless network, the electronic device comprising:
a wireless network interface configured to connect the handheld device to the wireless network;
a memory containing processor-executable instructions for implementing motion-based communication; and
a processor electrically coupled to the memory, the processor configured to execute the processor-executable instructions to:
associate a plurality of movements with a plurality of corresponding communications,
detect a motion of the handheld device,
determine if said motion corresponds to one of the plurality of movements, and
send one of the plurality of corresponding communications over the wireless network to the target user device when said motion corresponds to one of the plurality of movements.

12. The handheld device of claim 11, wherein the plurality of movements and corresponding plurality of communications are stored in a database accessible by said processor.

13. The handheld device of claim 12, wherein the processor is further configured to execute the processor-executable instructions to:
store a user-defined movement in the database, and
store a user-defined communication corresponding to the user-defined movement in the database.

14. The handheld device of claim 12 or 13, wherein the processor is configured to execute the processor-executable instructions to determine if the motion corresponds to one of the plurality of movements by performing a lookup of the database for said motion.

15. The handheld device of any of claims 11 to 14, wherein the processor is configured to execute the processor-executable instructions to determine if the motion corresponds to one of the plurality of movements by comparing said motion to the plurality of movements until a match is identified.

16. The handheld device of any of claims 11 to 15, wherein said motion is a result of user movement of the handheld device.

17. The handheld device of any of claims 11 to 16, wherein the one of the plurality of corresponding communications is one of a text-based communication, an icon-based communication and an avatar interaction.

18. The handheld device of any of claims 11 to 17, wherein the processor is configured to execute the processor-executable instructions to determine if the motion corresponds to one of the plurality of movements by executing a motion sensing application program on the handheld device configured to match the handheld device motion to one of the plurality of movements.

19. The handheld device of any of claims 11 to 18, wherein the processor is configured to execute the processor-executable instructions to enter a motion sensing mode prior to said detecting.

20. The handheld device of any of claims 11 to 19, wherein the processor is configured to execute the processor-executable instructions to determine a communication context, and wherein the plurality of movements is based at least in part on the communication context.

21. A computer program product, comprising:
a processor readable medium having processor executable code embodied therein to enable motion-based communication using a handheld device, the processor readable medium having:
processor executable program code to associate a plurality of movements with a plurality of corresponding communications;
processor executable program code to detect a handheld device motion;
processor executable program code to determine if the handheld device motion corresponds to one of the plurality of movements; and
processor executable program code to send, from the handheld device, one of the plurality of corresponding communications over a wireless network when said handheld device motion corresponds to one of the plurality of movements.

22. The computer program product of claim 21, wherein the processor executable program code to associate the plurality of movements with the plurality of corresponding communications comprises processor executable program code to store, in a database, the plurality of movements and the plurality of corresponding communications.

23. The computer program product of claim 22, the processor readable medium further having:
processor executable program code to store a user-defined movement in the database; and
processor executable program code to store a user-defined communication corresponding to the user-defined movement in the database.

24. The computer program product of claim 22 or 23, wherein the processor executable program code to determine if the handheld device motion corresponds to one of the plurality of movements comprises processor executable program code to perform a lookup of the database for the detected handheld device motion.

25. The computer program product of any of claims 21 to 24, wherein the processor executable program code to determine if the handheld device motion corresponds to one of the plurality of movements comprises processor executable program code to compare the detected handheld device motion to each of the plurality of movements to identify a match.

26. The computer program product of any of claims 21 to 25, wherein the handheld device motion is a result of user movement of the handheld device.

27. The computer program product of any of claims 21 to 26, wherein the one of the plurality of corresponding communications is one of a text-based communication, an icon-based communication and an avatar interaction.

28. The computer program product of any of claims 21 to 27, wherein the processor executable program code to determine if the handheld device motion corresponds to a motion sensing application program on the handheld device configured to match the handheld device motion to one of the plurality of movements.

29. The computer program product of any of claims 21 to 28, wherein the processor readable medium further having processor executable program code to enter a motion sensing mode prior to said detecting.

30. The computer program product of any of claims 21 to 29, wherein the processor readable medium further having processor executable program code to determine a communication context, and wherein the plurality of movements is based at least in part on the communication context.
